# EUROPÄISCHE PATENTSCHRIFT

(11) **EP 1 388 445 B1**
(45) Veröffentlichungstag und Bekanntmachung des Hinweises auf die Patenterteilung: **27.09.2006**
(21) Anmeldenummer: 03015241.7
(22) Anmeldetag: 05.07.2003
(51) Int. Cl.: B60H 1/26, B60H 1/24

(54) **Vorrichtung zum Ableiten eines Leckage-Gases aus einem Kfz-Raum**
Device for evacuating a leakage gas from a vehicle interior space
Dispositif d'évacuation d'un gaz sortant d'une fuite d'un espace d'un véhicule

(30) Priorität: 09.08.2002 DE 10236712
(43) Veröffentlichungstag der Anmeldung: 11.02.2004
(73) Patentinhaber: Bayerische Motoren Werke Aktiengesellschaft, 80809 München (DE)
(72) Erfinder: Reith, Gebhard, 85104 Pförring (DE); Stöcklin, Michael, 80992 München (DE)

(56) Entgegenhaltungen:
- DE-A- 2 160 760
- DE-A- 10 049 894
- US-A- 4 592 269
- US-B1- 6 290 594

## Beschreibung

Die Erfindung bezieht sich auf eine Vorrichtung zum Ableiten von gasförmigem Wasserstoff aus einem Kfz-Raum in die freie Umgebung mit einer für gasförmigen Wasserstoff (H2) durchlässigen und wasserdichten Abdeckung für eine der Gas-Ableitung dienenden Durchbrechung in einer Raumbegrenzung.

Bei Kraftfahrzeugen mit an Bord mitgeführtem Wasserstoff kann aus einem Wasserstoff verbrauchenden System gasförmiger Wasserstoff austreten mit der Gefahr einer Gasansammlung in einem der relativ dichten Räume des Fahrzeuges, wodurch insbesondere die Gefahr einer brennbaren Gaskonzentration gegeben ist.

Um der Entstehung dieser Gefahr entgegenzuwirken, wurde in der DE 39 07 049 A ein Sicherheitssystem für ein Fahrzeug mit einer mit Wasserstoff betreibbaren Brennkraftmaschine vorgeschlagen, wobei in jedem Kfz-Raum, wie dem Kofferraum, dem Motorraum und dem Fahrgastraum, jeweils mindestens ein mit einer elektronischen Schaltung zusammenwirkender Gas-Sensor angeordnet ist. Durch ein entsprechendes Signal des jeweiligen Gas-Sensors wird eine den jeweiligen Kfz-Raum begrenzende Haube oder Türe oder Fensterscheibe um ein vorbestimmtes Maß geöffnet zur Belüftung.

Aus der US-PS 6 290 594 ist ein vergleichbares Sicherheitssystem für ein Fahrzeug bekannt, das mit Brennstoffzellen ausgerüstet ist. Hierbei ist in jedem mit einem Gas-Sensor ausgerüsteten Kfz-Raum im Bereich einer bevorzugten Wasserstoff-Ansammlung ein über Signale des zugeordneten Gas-Sensors ansteuerbarer Ventilator vorgesehen zur Ableitung des gasförmigen Wasserstoffes über Durchbrechungen in der Außenkontur des Fahrzeuges, wie beispielsweise eines Pkw.

Nachteilig beim aufgezeigten Stand der Technik ist, dass die gefährdeten Bereiche mit aufwändiger Gas-Sensorik incl. zugehörigen Elektroinstallationen überwacht werden, um durch eine entsprechende Aktuatorik bei Alarm durch aktives Öffnen von Fenstern, eventuell einem Schiebedach sowie einer Heckklappe und/oder einer Motorhaube einer gefährlichen Konzentration von Wasserstoff - H2 - entgegenzuwirken. Nachteilig bei diesen bekannten Sicherheitssystemen ist der hohe Energieaufwand sowie der große apparative Aufwand und damit verbunden eine aufwändige Wartung.

DE 2 160 760 A offenbart eine Vorrichtung nach dem Oberbegriff des Anspruchs 1.

Der Erfindung liegt die Aufgabe zugrunde, eine ohne Aufwand an Bord-Energie wirksame, gattungsgemäße Vorrichtung zum Ableiten eines Leckage-Gases aufzuzeigen.

Diese Aufgabe ist mit dem Patentanspruch 1 dadurch gelöst, dass die Abdeckung einen Katalysator zur Umsetzung von Wasserstoff mit Umgebungsluft zu Wasser aufweist.

Mit der Erfindung ist in vorteilhafter Weise ohne Energie-Aufwand eine ständige Ableitung eines Leckage-Gases erzielt, wobei mit der erfindungsgemäß kombinierten Funktion einer Flüssigkeitsabweisung ein nachteiliges Eindringen einer Flüssigkeit, insbesondere Wasser, in den jeweiligen Raum unterbunden ist.

Eine vorteilhafte Anwendung der Erfindung ist dadurch erreicht, dass die Abdeckung ein insbesondere außen- bzw. umgebungsseitig wasserdichtes Gewebe ist.

Die erfindungsgemäße Verwendung der Gasableit-Vorrichtung bei Kraftfahrzeugen ermöglicht in vorteilhafter Weise einen ständigen Betrieb ohne einer Bord-Energie, sie ist daher ferner in hohem Maße eigensicher und bedarf keiner apparativen Überwachung. Im übrigen ist sie auch von geringem Gewicht.

In einer ersten Ausgestaltung ist der Katalysator als ein mit einem katalytisch wirkenden Element versehenes Geflecht gestaltet, das auf dem wasserdichten Gewebe außen- bzw. umgebungsseitig aufliegend angeordnet ist. Das katalytisch wirksame Geflecht ist mittels eines Metallgitters in der Durchbrechung der Außenkontur des Fahrzeuges gesichert gehalten. Das Metallgitter unterbindet in vorteilhafter Weise eine eventuelle Flammenbildung bei der katalytisch bewirkten Reaktion des Wasserstoffes mit der Umgebungsluft.

Die erfindungsgemäße Vorrichtung bietet bei einfachem Aufbau eine einfache Montage dadurch, dass Gewebe, Geflecht und Metallgitter in einem gemeinsamen Rahmen angeordnet sind und eine in die Durchbrechung einsetzbare Montageeinheit bilden.

Anstelle des katalytischen Geflechtes in der vorgenannten Montageeinheit kann gemäß einer zweiten Ausgestaltung auch ein Katalysator vorgesehen sein, der eine aus festem Material gebildete, poröse Wandung ist, die über wenigstens den halben, der Umgebung zugewandten Dickenabschnitt mit einem katalytisch wirkenden Edelmetall beschichtet ist.

Im übrigen hält das außen- bzw. umgebungsseitig wasserdichte Gewebe der Abdeckung auch das bei der katalytischen Reaktion anfallende Wasser zurück.

In einer weiteren bevorzugten Ausgestaltung wird vorgeschlagen, dass einem Kfz-Raum im bevorzugten Sammelbereich von Leckage - Wasserstoff in einem im wesentlichen horizontalen Abschnitt der Außenkontur eine Durchbrechung aufweist, der eine vom Fahrtwind-Unterdruck beaufschlagte weitere Durchbrechung zugeordnet ist, die über eine Ableitung mit dem Leckage-Sammelbereich in gasführender Verbindung steht.

Eine weitere bzw. zusätzliche Anordnung der erfindungsgemäßen Vorrichtung ist dadurch erreicht, dass ein an der Außenkontur des Fahrzeuges angeordneter und mit einem Kfz-Raum gasführend verbundener Aufsatz eine im Fahrtwindschatten vorgesehene, vom Katalysator verschlossene Durchbrechung aufweist, der fahrzeuginnenseitig die Abdeckung aus einem wasserdichten Gewebe zugeordnet ist.

Zur Erzielung einer wasserdichten Anordnung ist das Gewebe bzw. die Abdeckung entlang der Seitenränder mit dem Katalysator wasserdicht verklebt.
Die Erfindung ist anhand eines in der Zeichnung dargestellten Beispiels beschrieben. Es zeigt:
- Fig. 1: ein Personen-Kraftfahrzeug in Draufsicht mit erfindungsgemäß angeordneten Vorrichtungen,
- Fig. 2: eine der Vorrichtungen in schematischer Darstellung in einem Schnitt gemäß der Linie A-A,
- Fig. 3: Vorrichtung als Dach-Aufsatz, im Querschnitt gezeigt.

Ein Wasserstoff - H2- an Bord mitführendes Personenkraftfahrzeug 1 ist mit Vorrichtungen 2 zum Ableiten von gasförmigem Leckage-Wasserstoff aus dem Motorraum und/oder dem Fahrgastraum und/oder dem Kofferraum ausgerüstet. Den für eine jeweilige Wasserstoff-Ableitung vorgesehenen Durchbrechungen 3 in der Außenkontur 1' des Fahrzeuges 1 in der Motorhaube 4, dem Fahrzeugdach 5 sowie der Kofferraumklappe 6 ist jeweils eine gasdurchlässige und flüssigkeitsdichte Abdeckung 7 zugeordnet.

Die erfindungsgemäße Vorrichtung 2 bewirkt ohne Nutzung einer Bord-Energie eine ständige Ableitung gasförmigen Wasserstoffes aus jedem der vorgenannten Kraftfahrzeug-Räume in die freie Umgebung. Um einem Eindringen insbesondere von Wasser in die vorgenannten Räume entgegenzuwirken, ist die Abdeckung 7 der Vorrichtung 2 zusätzlich flüssigkeitsdicht ausgebildet.

Zur Erzielung einer im Aufbau einfachen und kostengünstigen Vorrichtung 2 ist die gasförmigen Wasserstoff durchlassende Abdeckung 7 vorzugsweise aus einem Gewebe gebildet, das insbesondere außen- bzw. umgebungsseitig wasserdicht ausgebildet oder präpariert ist.

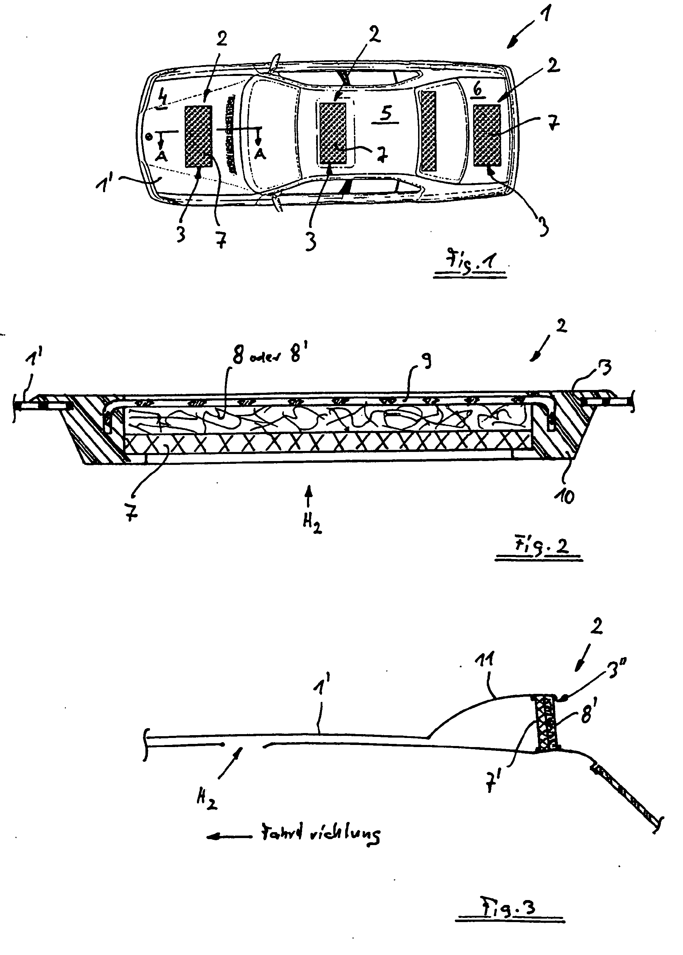

Um die in die freie Umgebung abgeleitete Menge an gasförmigen Wasserstoff gering zu halten, ist der Abdeckung 7 ein in Fig. 2 gezeigter Katalysator 8 zugeordnet, der durch katalytische Reaktion den Wasserstoff mit Umgebungsluft zu Wasser umsetzt.

Der Katalysator 8 ist gemäß einer ersten Ausgestaltung als ein mit einem katalytisch wirkenden Element versehenes Geflecht gebildet, das dem wasserdichten Gewebe außen- bzw. umgebungsseitig zugeordnet ist. Nach einer anderen Ausgestaltung ist der Katalysator 8 eine aus festem Material gebildete, poröse Wandung, die über wenigstens den halben, der Umgebung zugewandten Dickenabschnitt in den Poren mit einem katalytisch wirkenden Edelmetall, z.B. Platin, beschichtet ist.

Die Ausgestaltung der Vorrichtung 2 sieht weiter vor, dass das auf dem wasserdichten Gewebe der Abdeckung 7 aufliegend angeordnete, katalytisch wirksame Geflecht oder der als poröse Wandung gestaltete Katalysator 8 mittels eines der Durchbrechung 3 zugeordneten Metallgitters 9 gesichert gehalten ist.

Wie aus Fig.2 ersichtlich, bilden Gewebe, Geflecht bzw. poröse Wandung 8 und Metallgitter 9 in einem gemeinsamen Rahmen 10 eine in die Durchbrechung 3 einsetzbare Montageeinheit.

Vorzugsweise ist die jeweilige Durchbrechung 3 in einem im wesentlichen horizontalen Abschnitt 4, 5, 6 der.Außenkontur 1' über einem im jeweiligen Kraftfahrzeug-Raum - Motorraum, Fahrgastraum, Kofferraum - bevorzugten Sammelbereich von Leckage-Wasserstoff angeordnet. Zur verstärkten Gas-Ableitung aus dem jeweiligen Kfz-Raum können in vertikalen Abschnitten der Außenkontur 1' vom Fahrtwind-unterdruck beaufschlagte weitere Durchbrechungen 3' vorgesehen sein, die ggf. über eine jeweilige Ableitung mit dem Leckage - Sammelbereich in gasführender Verbindung stehen.

Eine andere Variante der Vorrichtung 2 kennzeichnet sich dadurch, dass ein an der Außenkontur 1' angeordneter und mit einem Kfz-Raum gasführend verbundener Aufsatz 11 eine im Fahrtwindschatten vorgesehene, von einer festen, porösen Wandung 8' verschlossene Durchbrechung 3" aufweist, der fahrzeuginnenseitig eine H2-durchlässige Abdeckung 7' aus einem wasserdichten Gewebe zugeordnet ist, wobei die poröse Wandung 8' über wenigstens den halben, der Umgebung zugewandten Dickenabschnitt mit einem als Katalysator wirkenden Edelmetall beschichtet ist. Weiter ist zur Erzielung einer wasserdichten Abdeckung 7' diese entlang der Seitenränder mit der Wandung 8' wasserdicht verbunden, z.B. verklebt.

Der Aufsatz kann auch als ein gesondertes Teil gestaltet sein, beispielsweise als eine Konsole für eine Außenantenne.

## Patentansprüche

1. Vorrichtung zum Ableiten von gasförmigem Wasserstoff aus einem Kfz-Raum in die freie Umgebung,
mit einer für gasförmigen Wasserstoff (H2) durchlässigen und wasserdichten Abdeckung (7,7') für eine der Gas-Ableitung dienenden Durchbrechung (3,3') in einer Raumbegrenzung (1'),
**dadurch gekennzeichnet,**
**dass** die Abdeckung (7,7') einen Katalysator (8,8') zur Umsetzung von Wasserstoff mit Umgebungsluft zu Wasser aufweist.

2. Vorrichtung nach Anspruch 1, **dadurch gekennzeichnet,**
**dass** die Abdeckung (7,7') ein insbesondere außen- bzw. umgebungsseitig wasserdichtes Gewebe ist.

3. Vorrichtung nach Anspruch 2,**dadurch gekennzeichnet,**
**dass** der Katalysator (8) als ein mit einem katalytisch wirkenden Element versehenes Geflecht gestaltet ist, das auf dem wasserdichten Gewebe (7) außen- bzw. umgebungsseitig aufliegend angeordnet ist.

4. Vorrichtung nach Anspruch 3, **gekennzeichnet,**
**durch** ein Metallgitter (9) zur Halterung des katalytisch wirkenden Geflechts (8) in der Durchbrechung (3).

5. Vorrichtung nach Anspruch 4, **dadurch gekennzeichnet,**
**dass** Gewebe (7), Geflecht (8) und Metallgitter (9) in einem gemeinsamen Rahmen (10) angeordnet sind und eine in die Durchbrechung (3) einsetzbare Montageeinheit bilden.

6. Vorrichtung nach Anspruch 1 oder 2, **dadurch gekennzeichnet,**
**dass** der Katalysator (8') eine aus festem Material gebildete, poröse Wandung ist, die über wenigstens den halben, der Umgebung zugewandten Dickenabschnitt mit einem katalytisch wirkenden Edelmetall beschichtet ist.

7. Kfz mit einer Vorrichtung nach einem der Ansprüche 1-6, **dadurch gekennzeichnet,**
**dass** ein Kfz-Raum (Motor-, Fahrgast-, Koffer-Raum) in einem bevorzugten Sammelbereich von Leckage-Wasserstoff in einem im wesentlichen horizontalen Abschnitt (4,5,6) der Außenkontur (1') eine Durchbrechung (3) aufweist, der eine vom Fahrtwindunterdruck beaufschlagte weitere Durchbrechung (3') zugeordnet ist, die über eine Ableitung mit dem Leckage-Sammelbereich in gasführender Verbindung steht

8. Kfz mit einer Vorrichtung nach den Ansprüchen 2 und 6, **dadurch gekennzeichnet,**
**dass** ein an der Außenkontur (1') angeordneter und mit einem Kfz-Raum gasführend verbundener Aufsatz (11) eine im Fahrtwindschatten vorgesehene, vom Katalysator (8') verschlossene Durchbrechung (3") aufweist, der fahrzeuginnenseitig die Abdeckung (7') aus wasserdichtem Gewebe zugeordnet ist.

9. Kfz nach Anspruch 8, **dadurch gekennzeichnet,**
**dass** das Gewebe bzw. die Abdeckung (7') entlang der Seitenränder mit dem Katalysator (8') wasserdicht verbunden ist.

## Claims

1. A device for discharging gaseous hydrogen from a compartment in a vehicle into the open atmosphere, comprising a watertight cover (7, 7') permeable to gaseous hydrogen (H2) over a gas-discharging aperture (3, 3') in a boundary (1') of a compartment, **characterised in that** the cover (7, 7') comprises a catalyst (8, 8') for converting hydrogen and ambient air to water.

2. A device according to claim 1, **characterised in that** the cover (7, 7') is a woven fabric, more especially watertight on the outer or ambient side.

3. A device according to claim 2, **characterised in that** the catalyst (8) is a network comprising a catalytically active element and resting on the outer or ambient side of the watertight fabric (7).

4. A device according to claim 3, **characterised by** a metal grid (9) for holding the catalytically active network (8) in the aperture (3).

5. A device according to claim 4, **characterised in that** the fabric (7), network (8) and metal grid (9) are disposed in a common frame (10) and form an assembly unit insertable into the aperture (3).

6. A device according to claim 1 or 2, **characterised in that** the catalyst (8') is a porous wall made of solid material and coated with a catalytically active noble metal over at least half the thickness of the portion facing the environment.

7. A motor vehicle with a device according to any of claims 1 to 6, **characterised in that** a compartment in the vehicle (engine space, passenger compartment, luggage space) has an aperture (3) in a substantially horizontal portion (4, 5, 6) of the outer contour (1') in a region where leaking hydrogen is likely to collect, the aperture being associated with a second aperture (3') acted upon by the airstream negative pressure and connected to the leak-collecting region via a gas-conveying outlet.

8. A vehicle with a device according to claims 2 and 6, **characterised in that** an attachment (11) disposed on the outer contour (1') and in gas-conveying connection with a compartment of the vehicle has an aperture (3") in the lee of the slipstream, sealed off from the catalyst (8') and associated on the inside of the vehicle with the cover (7') made of watertight fabric.

9. A vehicle according to claim 8, **characterised in that** the fabric or cover (7') is connected in watertight manner to the catalyst (8') along its side edges.

## Revendications

1. Dispositif d'évacuation à l'air libre d'hydrogène gazeux d'un espace d'un véhicule automobile comprenant une couverture (7, 7') perméable à l'hydrogène (H2) gazeux et imperméable à l'eau pour une ouverture (3, 3') prévue dans un contour extérieur (1') et servant à l'évacuation de gaz,
**caractérisé en ce que**
la couverture (7, 7') présente un catalyseur (8, 8') pour transformer l'hydrogène en eau avec de l'air ambiant.

2. Dispositif selon la revendication 1,
**caractérisé en ce que**
la couverture (7, 7') est un tissu imperméable à l'eau en particulier sur la face extérieure ou côté environnement.

3. Dispositif selon la revendication 2,
**caractérisé en ce que**
le catalyseur (8) est conçu sous la forme d'un treillis muni d'un élément à effet catalytique disposé sur la face extérieure ou côté environnement du tissu (7) imperméable à l'eau.

4. Dispositif selon la revendication 3,
**caractérisé par**
une grille métallique (9) pour bloquer le treillis (8) à effet catalytique dans l'ouverture (3).

5. Dispositif selon la revendication 4,
**caractérisé en ce que**
le tissu (7), le treillis (8) et la grille métallique (9) sont disposés dans un cadre (10) commun et forment une unité de montage pouvant être insérée dans l'ouverture (3).

6. Dispositif selon la revendication 1 ou 2,
**caractérisé en ce que**
le catalyseur (8') est une paroi poreuse en matériau solide revêtue d'un métal noble à effet catalytique sur au moins la moitié de l'épaisseur du segment tourné vers l'environnement.

7. Véhicule automobile muni d'un dispositif selon l'une des revendications 1 à 6,
**caractérisé en ce qu'**
un espace du véhicule (chambre de moteur, habitacle, coffre), dans une zone d'accumulation préférentielle d'hydrogène de fuite, dans une zone pour l'essentiel horizontale (4, 5, 6) du contour extérieur (1'), présente une ouverture (3) à laquelle est associée une autre ouverture (3') sollicitée par la dépression du vent, en communication conductrice de gaz avec la zone d'accumulation de fuite par l'intermédiaire d'une conduite d'évacuation.

8. Véhicule automobile muni d'un dispositif selon l'une des revendications 2 à 6,
**caractérisé en ce qu'**
un chapeau (11) situé sur le contour extérieur (1') et relié de façon conductrice de gaz à un espace du véhicule présente une ouverture (3") prévue à l'abri du vent et fermée par le catalyseur (8'), à laquelle est associée côté habitacle la couverture (7') en tissu imperméable à l'eau.

9. Véhicule automobile muni d'un dispositif selon la revendication 8,
**caractérisé en ce que**
le tissu ou la couverture (7') est collé de façon imperméable à l'eau le long des bords latéraux avec le catalyseur (8').
